# EUROPÄISCHE PATENTSCHRIFT

(11) **EP 1 445 436 B1**
(45) Veröffentlichungstag und Bekanntmachung des Hinweises auf die Patenterteilung: **26.04.2006**
(21) Anmeldenummer: 03104946.3
(22) Anmeldetag: 23.12.2003
(51) Int. Cl.: F01M 11/03, F01M 1/02, F01M 1/10

(54) **Ölmodul mit integriertem Ölfilter und Ölpumpe**
Oil module integrating oil filter and pump
Module de lubrification avec filtre et pompe integrés

(30) Priorität: 25.01.2003 DE 10304037
(43) Veröffentlichungstag der Anmeldung: 11.08.2004
(73) Patentinhaber: MANN+HUMMEL GmbH, 71638 Ludwigsburg (DE)
(72) Erfinder: Bauer, Sascha, 71549, Auenwald (DE)

(56) Entgegenhaltungen:
- DE-A- 10 028 159
- DE-C- 4 423 589
- US-A- 4 977 870
- US-A- 5 771 854
- US-B1- 6 267 094

## Beschreibung

Die Erfindung betrifft ein Ölmodul, insbesondere für eine Brennkraftmaschine, der im Oberbegriff des Anspruchs 1 angegebenen Gattung.

Aus der DE 44 23 589 C1 ist ein Ölmodul mit einer Ölpumpe und einem Ölfilter bekannt. Das Ölmodul besitzt ein Trägerelement, in dem die Ölpumpe integriert ist und an dem das Gehäuse für die Ölpumpe angeordnet ist.

Der Erfindung liegt die Aufgabe zugrunde, ein Ölmodul der gattungsgemäßen Art zu schaffen, das einen einfachen Aufbau besitzt und eine kurze Fluidführung ermöglicht.

Diese Aufgabe wird durch ein Ölmodul mit den Merkmalen des Anspruchs 1 gelöst.

Die Anordnung von Ölpumpe und Ölfilter in einem gemeinsamen Pumpenbecher verringert die Anzahl der benötigten Bauteile. Fluidleitungen zwischen der Ölpumpe und dem Ölfilter werden nicht benötigt. Es kann ein kompakter Aufbau erreicht werden.

Zweckmäßig ist die Ölpumpe eine Zahnradpumpe mit einem ersten und einem zweiten Zahnrad. Das erste Zahnrad ist insbesondere mit der Antriebswelle drehfest verbunden. Zum Toleranzausgleich am zweiten Zahnrad der Zahnradpumpe ist vorgesehen, daß von der Druckseite der Zahnradpumpe ein Fluidkanal auf die der Saugseite zugewandte Seite des zweiten Zahnrads führt und an einem gegenüber der Saugseite fluidisch getrennten Bereich an der Stirnseite des zweiten Zahnrads mündet. Am zweiten Zahnrad herrscht somit in einem bestimmten Bereich ein Druck, der etwa dem Druck auf der Druckseite der Zahnradpumpe entspricht. Hierdurch kann Spiel zwischen dem Zahnradträger und dem Zahnrad ausgeglichen werden. Gleichzeitig müssen an die Fertigungsgenauigkeit von Zahnrad und Zahnradträger nur geringe Anforderungen gestellt werden, da die Toleranzen über die hydraulische Lagerung ausgeglichen werden können. Es ist vorgesehen, daß in dem Fluidkanal eine Drossel angeordnet ist. Zweckmäßig ist auf der Druckseite der Zahnradpumpe eine Druckmeßeinrichtung angeordnet, die die Drossel im Fluidkanal steuert. Durch die Drosselsteuerung kann der Anlagedruck der Zahnräder reguliert werden. Ein zu hoher Anlagedruck des zweiten Zahnrads an einer Anlagefläche, der zu erhöhtem Verschleiß an den aneinander abgleitenden Flächen führen würde, kann dadurch vermieden werden.

Um Spiel zwischen den Komponenten gut ausgleichen zu können ist vorgesehen, daß der Zahnradträger im Pumpenbecher in Richtung der Drehachse der Antriebswelle beweglich gelagert ist. Eine einfache Anordnung ergibt sich, wenn der Zahnradträger gegenüber dem Pumpenbecher in Richtung der Drehachse der Antriebswelle gefedert gelagert ist. Die Feder legt dabei den Anlagedruck des Zahnrads an einem Gehäuse weitgehend fest. Vorteilhaft besteht der Zahnradträger aus Kunststoff. Hierdurch kann ein geringes Gewicht des Ölmoduls erreicht werden und auch große Stückzahlen können einfach gefertigt werden. Um auch bei weitgehend zugesetztem Ölfilter eine ausreichende Schmierstoffversorgung der Brennkraftmaschine zu gewährleisten, ist ein Bypassventil zum Ölfilter vorgesehen, das insbesondere im Zahnradträger angeordnet ist. Zur Druckregelung auf der Druckseite der Ölpumpe ist zweckmäßig ein Überdruckventil vorgesehen.

Es kann zweckmäßig sein, daß die Antriebswelle die Kurbelwelle eines Verbrennungsmotors ist. Ölpumpe und Ölfilter sind dabei insbesondere koaxial zur Kurbelwelle direkt auf dieser angeflanscht, und der Pumpenbecher ist zweckmäßig am Kurbelgehäuse festgelegt. Es kann jedoch auch zweckmäßig sein, daß die Antriebswelle durch einen Elektromotor angetrieben ist, insbesondere, wenn eine Anordnung an der Kurbelwelle des Verbrennungsmotors aus Platzgründen nicht möglich ist.

Ausführungsbeispiele der Erfindung werden im folgenden anhand der Zeichnung erläutert. Es zeigen:

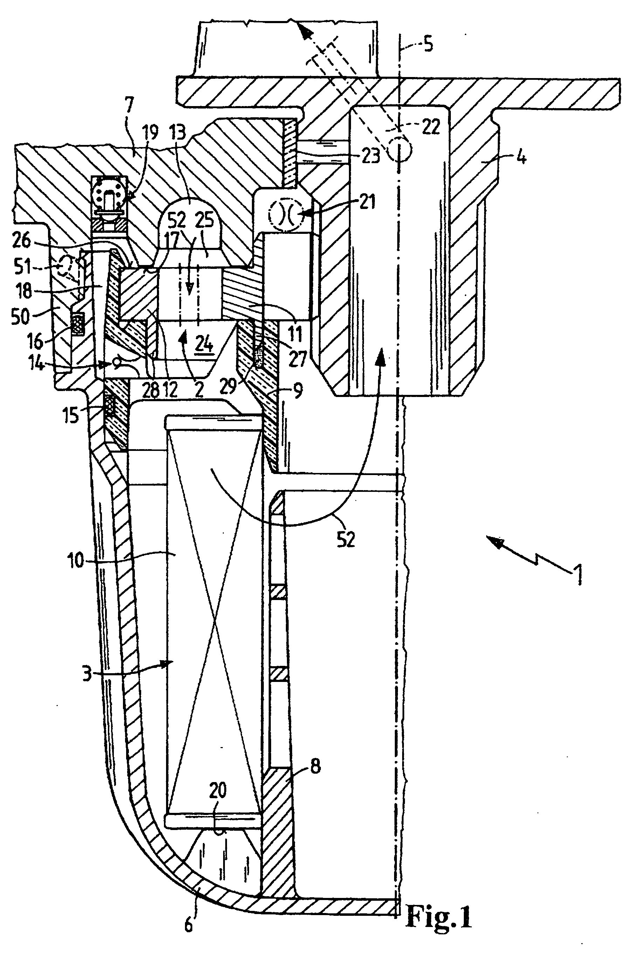

- Fig. 1 bis Fig. 3: schematische Darstellungen von Ölmodulen im Längsschnitt.

Das in Fig. 1 dargestellte Ölmodul 1 ist koaxial zu einer Antriebswelle 4 angeordnet, die insbesondere die Kurbelwelle eines Verbrennungsmotors ist. Die Antriebswelle 4 ist in einem Gehäuse 7, das insbesondere das Kurbelgehäuse des Verbrennungsmotors ist, mit einem Gleitlager 23 drehbar gelagert. Das Ölmodul 1 dient zur Förderung und Filtration von Öl aus dem Zulauf 13 zu einem Ablauf, der durch eine Schmierbohrung 22 in der Antriebswelle 4 gebildet ist. Durch die Schmierbohrung 22 wird den weiteren Lagerstellen der Kurbelwelle Schmieröl zugeführt.

Das Ölmodul 1 umfaßt eine Ölpumpe 2, die ein erstes Zahnrad 11 und ein zweites Zahnrad 12 besitzt. Das erste Zahnrad 11, das eine Außenverzahnung besitzt, ist mit der Antriebswelle 4 drehfest verbunden. Das erste Zahnrad 11 und das zweite Zahnrad 12 liegen mit ihrer dem Gehäuse 7 zugewandten Stirnseite am Gehäuse 7 an. Die gegenüberliegende Seite der Zahnräder 11 und 12 stützt sich an einem Zahnradträger 9 ab. Die Ölpumpe 2 ist stromab eines an dem Gehäuse 7 ausgebildeten Zulaufs 13 angeordnet. Der Zulauf 13 ist dabei auf der Saugseite 25 der Ölpumpe 2 angeordnet, während der Zahnradträger 9 auf der gegenüberliegenden Druckseite 24 der Ölpumpe 2 angeordnet ist. Der Zahnradträger 9 ist in Richtung der Drehachse 5 der Antriebswelle 4 beweglich in einem Pumpenbecher 6 gelagert. Das erste Zahnrad 11 besitzt einen sich in axialer Richtung erstreckenden Ringrand 27, der in einer Ringnut 29 im Zahnradträger 9 geführt ist. Der sich in axialer Richtung erstreckende Ringrand 28 am zweiten Zahnrad 12 ist an seinem Außenumfang vom Zahnradträger 9 geführt.

Radial außerhalb des Zahnradträgers 9 erstreckt sich von der Druckseite 24 zu der der Saugseite 25 zugewandten Stirnseite 26 des äußeren Zahnrads 12 ein Fluidkanal 18. Der Fluidkanal 18 ist zweckmäßig als Ringkanal ausgebildet. Zur Abdichtung des Ringkanals 18 ist in einer Nut am Zahnradträger 9 eine Dichtung 15 angeordnet, die sich zwischen dem Zahnradträger 9 und dem Pumpenbecher 6 erstreckt. Der Fluidkanal 18 ist mit der Druckseite 24 der Ölpumpe 2 über eine Drossel 14 verbunden. Die Drossel 14 ist insbesondere über eine an der Druckseite 24 der Ölpumpe 2 angeordnete Druckmeßeinrichtung gesteuert. Der Fluidkanal 18 mündet an der Stirnseite 26 des zweiten Zahnrads 12 an einem radial außerhalb der Saugseite 25 gelegenen Bereich. Der Bereich ist über eine Dichtstelle 17 gegenüber der Saugseite 25 fluidisch getrennt. Der Fluidkanal 18 ermöglicht eine hydraulische Lagerung des zweiten Zahnrads 12. So kann beispielsweise durch Fertigungstoleranzen bedingtes Spiel zwischen Zahnradträger und Zahnrad ausgeglichen werden. Die Drossel 14 ist dabei so gesteuert, daß eine sichere Abdichtung im Bereich der Dichtstelle 17 gewährleistet ist, und gleichzeitig die Reibungskräfte zwischen dem Gehäuse 7 und dem zweiten Zahnrad 2 keinen übermäßig hohen Verschleiß bedingen.

Stromab der Ölpumpe 2 ist ein Ölfilter 3 im Pumpenbecher 6 angeordnet. Der Ölfilter 3 umfaßt ein zylindrisches Filterelement 10, das koaxial zur Drehachse 5 der Antriebswelle 4 angeordnet ist und das von einem mit dem Pumpenbecher 6 verbundenen Mittelrohr 8 zentriert gehalten ist. An dem der Antriebswelle 4 zugewandten Ende ist das Filterelement 10 fluiddicht mit dem Zahnradträger 9 verbunden. In Längsrichtung der Drehachse 5 stützt sich das Filterelement 10 auf einer im Pumpenbecher 6 ausgebildeten Auflage 20 ab.

Der Pumpenbecher 6 ist am Gehäuse 7 in einem ringförmig ausgebildeten Flansch 50 angeordnet. Zur Abdichtung gegen die Außenseite des Pumpenbechers 6 ist eine Dichtung 16 am Pumpenbecher 6 vorgesehen, die sich radial nach außen bis zum Flansch 50 erstreckt. Der zwischen dem Pumpenbecher und dem Zahnradträger 9 ausgebildete Ringkanal 18 ist mit einem im Gehäuse 7 angeordneten Ventil 19 verbunden, das bei Überdruck im Ringkanal 18 öffnet und das Öl zu einem Ablauf 51, beispielsweise in eine Ölwanne, führt.

Im Betrieb des Ölmoduls 1 fließt das Öl vom Zulauf 13 in Richtung der Pfeile 52 zunächst durch die Ölpumpe 2, dann durch den Ölfilter 3 und durch das Mittelrohr 8 zur Antriebswelle 4, wo es den Pumpenbecher 6 durch die Schmierbohrung 22 verläßt. Zusätzlich ist eine Drossel 21 vorgesehen, durch die Öl aus dem Pumpenbecher 6 entweichen kann, um weitere Schmierstellen im Motorblock mit einem begrenzten Volumenstrom zu erreichen.

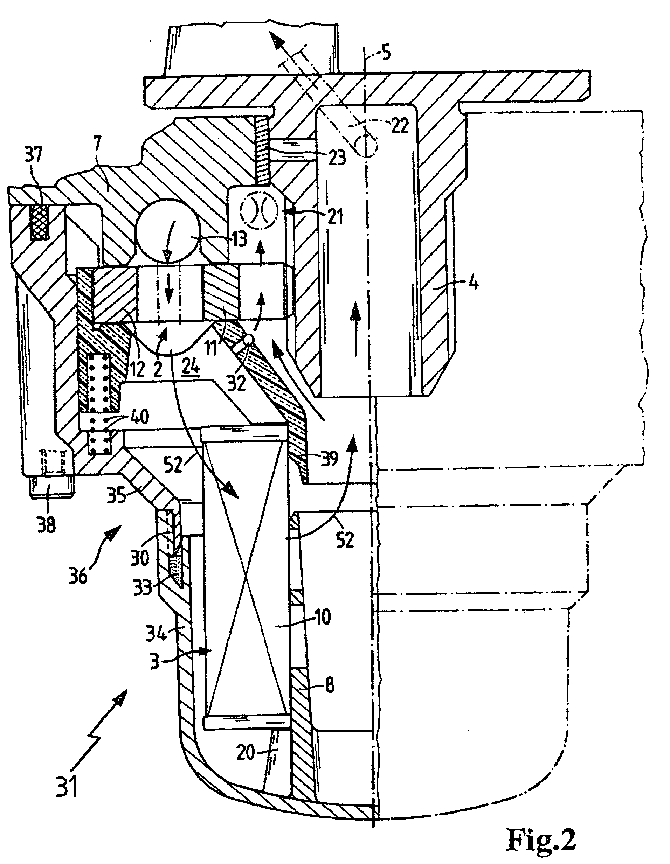

Das in Fig. 2 dargestellte Ölmodul 31 ist ebenfalls konzentrisch auf einer Antriebswelle 4 angeordnet. Gleiche Bezugszeichen wie in Fig. 1 bezeichnen dabei gleiche Bauteile. Das Ölmodul 31 besitzt eine Ölpumpe 2, deren erstes Zahnrad 11 drehfest mit der Antriebswelle verbunden ist. In der Richtung der Drehachse 5 der Antriebswelle 4 sind die Zahnräder 11 und 12 der Ölpumpe 2 zwischen dem Gehäuse 7 der Antriebswelle 4 und einem Zahnradträger 39 gelagert. Stromab der Ölpumpe 2 ist ein Ölfilter 3 angeordnet, der koaxial zur Drehachse 5 der Antriebswelle 4 angeordnet ist. Der Zahnradträger 39 ist in einem Pumpenbecher 36 in Richtung der Drehachse 5 beweglich gelagert. Um Spiel zwischen der Ölpumpe 2 und dem Zahnradträger 39 ausgleichen zu können, ist der Zahnradträger 39 im Pumpenbecher 36 beweglich und gegenüber dem Pumpenbecher 36 mit einer Feder 40 gefedert gelagert. Der Pumpenbecher 36 ist zweiteilig ausgebildet, wobei ein Flanschteil 35 des Pumpenbechers 36 am Gehäuse 7 mit Befestigungsschrauben 38 verschraubt ist. An der Stirnseite des Flanschteils 35 ist eine Dichtung 37 angeordnet, mit der der Pumpenbecher 36 gegenüber dem Gehäuse 7 abgedichtet wird. Der Deckel 34 des Pumpenbechers 36 kann an dem Flanschteil beispielsweise über ein Gewinde 30 befestigt sein. Zwischen den beiden Teilen 34 und 35 des Pumpenbechers 36 ist eine Dichtung 33 angeordnet. Im Betrieb des Ölmoduls 31 fließt Öl durch den Zulauf 13 über die Ölpumpe 2 entlang der Pfeile 52 durch den Ölfilter 3 und verläßt das Ölmodul 31 über die Drossel 21 oder die Schmierbohrung 22. Im Zahnradträger 39 ist ein Bypassventil 32 angeordnet, das bei zu großer Druckdifferenz zwischen der Rohseite und der Reinseite des Ölfilters 3 öffnet, so daß auch bei zugesetztem Ölfilter 3 eine Schmierstoffversorgung gewährleistet ist.

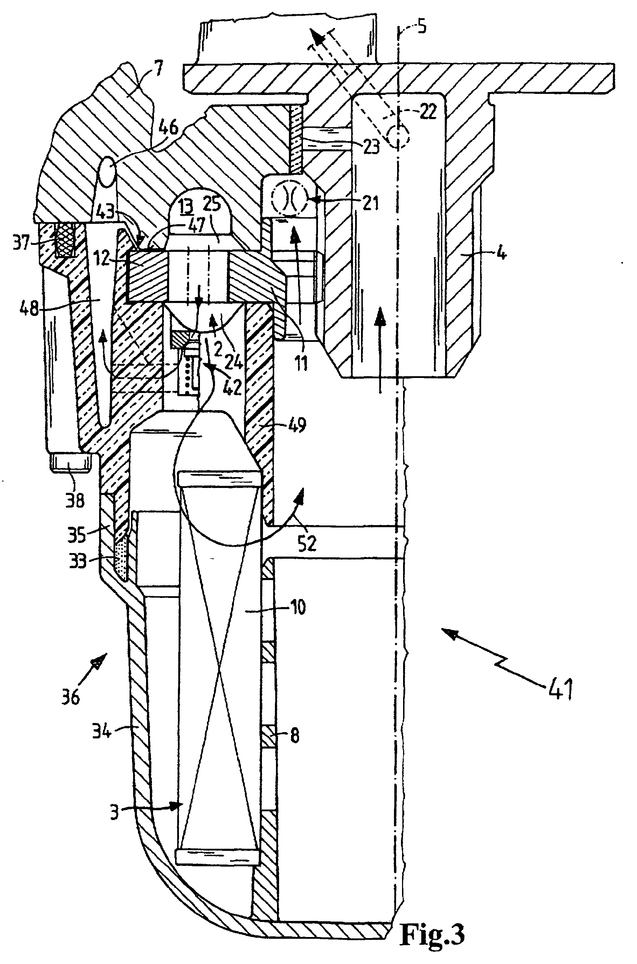

Bei dem in Fig. 3 dargestellten Ölmodul 41 ist der Pumpenbecher 36 ebenfalls aus zwei Abschnitten 34 und 35 gebildet, die gegeneinander über eine Dichtung 33 abgedichtet sind. Stromab der Ölpumpe 2 ist im Ölmodul 41 ein Überdruckventil 42 angeordnet. Das Überdruckventil 42 öffnet ab einem bestimmten Druck auf der Druckseite 24 der Ölpumpe 2. Das durch das Überdruckventil 42 strömende Öl gelangt in einen Fluidkanal 48, der als Ringkanal ausgebildet ist und der in einem Bereich 43 drucklos an der der Saugseite 25 zugewandten Stirnseite der Ölpumpe 2 mündet. Der drucklose Bereich 43 bewirkt eine erhöhte Anpressung des Zahnrads 12 und ist über eine Dichtstelle 47 gegenüber der Saugseite 25 abgedichtet. Der Fluidkanal 48 ist mit einem im Gehäuse 7 ausgebildeten Ablauf 46 verbunden, der beispielsweise zur Ölwanne eines Verbrennungsmotors führt. Das Überdruckventil 42 regelt somit den Öl-Systemdruck und leitet das Öl drucklos über den Ablauf 46 zurück. Damit ersetzt das Überdruckventil 42 die Drossel 14 und das Ventil 19 des in Fig. 1 dargestellten Ölmoduls 1. Die Ölpumpe 2 ist von einem Zahnradträger 49 gehalten, der einteilig mit dem Flanschteil 35 des Pumpenbechers 36 ausgebildet ist. Zum Auswechseln des Filterelements des Ölfilters 3 muß lediglich der Deckel 34 des Pumpenbechers 36 abgenommen werden. Die Ölpumpe 2 kann beim Ölfilterwechsel am Gehäuse 7 verbleiben.

Bei der Montage der Ölmodule 1 und 31 aus den Fig. 1 und 2 wird zunächst das Filterelement 10 in den Pumpenbecher 6, 36 eingesetzt, anschließend der Zahnradträger 9, 39 aufgesetzt und dann die Zahnräder 11 und 12 der Ölpumpe 2 eingeklipst. Die Ölpumpe 2 wird dabei zweckmäßig bei jedem Filterwechsel ersetzt. Bei dem in Fig. 3 dargestellten Ölmodul 41 verbleibt die Ölpumpe 2 während des Filterwechsels am Gehäuse 7. Die Zahnräder 11 und 12 sind zweckmäßig als Lebensdauerzahnräder ausgebildet.

Es kann zweckmäßig sein, die Ölpumpe 2 an dem dem Gehäuse 7 abgewandten Ende des Ölfilters 3 anzuordnen. Vorteilhaft sind die Zahnradträger 9, 39, 49 aus Kunststoff ausgebildet. Die Antriebswelle 4 ist vorteilhaft die Kurbelwelle eines Verbrennungsmotors, es kann jedoch auch ein elektrischer Antrieb wie ein Elektromotor für die Antriebswelle vorgesehen sein. Der elektrische Antrieb ermöglicht insbesondere die unabhängige Positionierung des Ölmoduls.

## Patentansprüche

1. Ölmodul, insbesondere für eine Brennkraftmaschine, mit einer Ölpumpe (2), die von einer Antriebswelle (4) angetrieben ist, wobei stromab der Ölpumpe (2) ein Ölfilter (3) angeordnet ist,
**dadurch gekennzeichnet, daß** Ölpumpe (2) und Ölfilter (3) in einem gemeinsamen Pumpenbecher (6, 36) angeordnet sind.

2. Ölmodul nach Anspruch 1,
**dadurch gekennzeichnet, daß** die Ölpumpe (2) eine Zahnradpumpe mit einem ersten Zahnrad (11) und einem zweiten Zahnrad (12) ist.

3. Ölmodul nach Anspruch 2,
**dadurch gekennzeichnet, daß** das erste Zahnrad (11) drehfest mit der Antriebswelle (4) verbunden ist.

4. Ölmodul nach Anspruch 2 oder 3,
**dadurch gekennzeichnet, daß** von der Druckseite (24) der Zahnradpumpe ein Fluidkanal (18, 48) auf die der Saugseite (25) zugewandte Seite des zweiten Zahnrads (12) führt und an einem gegenüber der Saugseite (25) fluidisch getrennten Bereich an der Stirnseite (26) des zweiten Zahnrads mündet.

5. Ölmodul nach Anspruch 4,
**dadurch gekennzeichnet, daß** in dem Fluidkanal (18) eine Drossel (14) angeordnet ist.

6. Ölmodul nach Anspruch 5,
**dadurch gekennzeichnet, daß** auf der Druckseite (24) der Zahnradpumpe eine Druckmeßeinrichtung angeordnet ist, die die Drossel (14) im Fluidkanal (18) steuert.

7. Ölmodul nach einem der Ansprüche 2 bis 6,
**dadurch gekennzeichnet, daß** das zweite Zahnrad (12) zwischen einem Gehäuse (7) der Antriebswelle (4) und einem Zahnradträger (9, 39, 49) gelagert ist.

8. Ölmodul nach Anspruch 7,
**dadurch gekennzeichnet, daß** der Zahnradträger (9, 39, 49) im Pumpenbecher (6, 36) in Richtung der Drehachse (5) der Antriebswelle (4) beweglich gelagert ist.

9. Ölmodul nach Anspruch 7 oder 8,
**dadurch gekennzeichnet, daß** der Zahnradträger (39) gegenüber dem Pumpenbecher (36) in Richtung der Drehachse (5) der Antriebswelle (4) gefedert gelagert ist.

10. Ölmodul nach einem der Ansprüche 7 bis 9,
**dadurch gekennzeichnet, daß** der Zahnradträger (9, 39, 49) aus Kunststoff besteht.

11. Ölmodul nach einem der Ansprüche 1 bis 10,
**dadurch gekennzeichnet, daß** ein Bypassventil (32) zum Ölfilter (3) vorgesehen ist, das insbesondere im Zahnradträger (39) angeordnet ist.

12. Ölmodul nach einem der Ansprüche 1 bis 11,
**dadurch gekennzeichnet, daß** auf der Druckseite (24) der Ölpumpe (2) ein Überdruckventil (42) vorgesehen ist.

13. Ölmodul nach einem der Ansprüche 1 bis 12,
**dadurch gekennzeichnet, daß** die Antriebswelle (4) die Kurbelwelle eines Verbrennungsmotors ist.

14. Ölmodul nach einem der Ansprüche 1 bis 12,
**dadurch gekennzeichnet, daß** die Antriebswelle (4) durch einen Elektromotor angetrieben ist.

## Claims

1. Oil module, more especially for an internal combustion engine, said oil module having an oil pump (2), which is driven by a drive shaft (4), wherein an oil filter (3) is disposed downstream of the oil pump (2), **characterised in that** oil pump (2) and oil filter (3) are disposed in a common pump container (6, 36).

2. Oil module according to claim 1, **characterised in that** the oil pump (2) is a gear pump with a first gear wheel (11) and a second gear wheel (12).

3. Oil module according to claim 2, **characterised in that** the first gear wheel (11) is non-rotatably connected to the drive shaft.

4. Oil module according to claim 2 or 3, **characterised in that** a fluid duct (18, 48) runs from the pressure side (24) of the gear pump to the side of the second gear wheel (12) facing the suction side (25) and terminates at a region on the end face (26) of the second gear wheel that is fluidly separated from the suction side (25).

5. Oil module according to claim 4, **characterised in that** a throttle (14) is disposed in the fluid duct (18).

6. Oil module according to claim 5, **characterised in that** a pressure measuring device, which controls the throttle (14) in the fluid duct (18), is disposed on the pressure side (24) of the gear pump.

7. Oil module according to one of claims 2 to 6, **characterised in that** the second gear wheel (12) is mounted between a housing (7) of the drive shaft (4) and a gear wheel carrier (9, 39, 49).

8. Oil module according to claim 7, **characterised in that** the gear wheel carrier (9, 39, 49) is mounted in the pump container (6, 36) so as to be displaceable in the direction of the axis of rotation (5) of the drive shaft (4).

9. Oil module according to claim 7 or 8, **characterised in that** the gear wheel carrier (39) is mounted so as to be spring-mounted relative to the pump container (36) in the direction of the axis of rotation (5) of the drive shaft (4).

10. Oil module according to one of claims 7 to 9, **characterised in that** the gear wheel carrier (9, 39, 49) is produced from plastics material.

11. Oil module according to one of claims 1 to 10, **characterised in that** a bypass valve (32) is provided to the oil filter (3), said bypass valve being disposed more especially in the gear wheel carrier (39).

12. Oil module according to one of claims 1 to 11, **characterised in that** a pressure relief valve (42) is provided on the pressure side (24) of the oil pump (2).

13. Oil module according to one of claims 1 to 12, **characterised in that** the drive shaft (4) is the crankshaft of a combustion engine.

14. Oil module according to one of claims 1 to 12, **characterised in that** the drive shaft (4) is driven by an electric motor.

## Revendications

1. Module de lubrification, en particulier pour un moteur à combustion interne, comprenant une pompe à huile (2) entraînée par un arbre d'entraînement (4), avec un filtre à huile (3) en aval de la pompe à huile (2),
**caractérisé en ce que**
la pompe à huile (2) et le filtre à huile (3) sont logée dans un carter de pompe (6, 36) commun.

2. Module de lubrification selon la revendication 1,
**caractérisé en ce que**
la pompe à huile (2) est une pompe à engrenages comprenant une première roue dentée (11) et une deuxième roue dentée (12).

3. Module de lubrification selon la revendication 2,
**caractérisé en ce que**
la première roue dentée (11) est reliée de façon non rotative avec l'arbre d'entraînement (4).

4. Module de lubrification selon la revendication 2 ou 3,
**caractérisé en ce que**
partant du côté pression (24) de la pompe à engrenages, un canal de fluide (18, 48) conduit vers le côté de la deuxième roue dentée (12) tourné vers le côté admission (25) et débouche au niveau d'une zone séparée fluidiquement du côté admission (25) au niveau du côté frontal (26) de la deuxième roue dentée.

5. Module de lubrification selon la revendication 4,
**caractérisé en ce qu'**
un étranglement (14) est disposé dans le canal de fluide (18).

6. Module de lubrification selon la revendication 5,
**caractérisé en ce qu'**
un dispositif de mesure de pression qui commande l'étranglement (14) dans le canal de fluide (18) est disposé sur le côté pression (24) de la pompe à engrenages.

7. Module de lubrification selon l'une des revendications 2 à 6,
**caractérisé en ce que**
la deuxième roue dentée (12) est logée entre un boîtier (7) de l'arbre d'entraînement (4) et un support de roue dentée (9, 39, 49).

8. Module de lubrification selon la revendication 7,
**caractérisé en ce que**
le support de roue dentée (9, 39, 49) est mobile dans le carter de pompe (6, 36) en direction de l'axe de rotation (5) de l'arbre d'entraînement (4).

9. Module de lubrification selon la revendication 7 ou 8,
**caractérisé en ce que**
le support de roue dentée (39) est monté sur ressort contre le carter de pompe (36) en direction de l'axe de rotation (5) de l'arbre d'entraînement (4).

10. Module de lubrification selon l'une des revendications 7 à 9,
**caractérisé en ce que**
le support de roue dentée (9, 39, 49) est en matière plastique.

11. Module de lubrification selon l'une des revendications 1 à 10,
**caractérisé par**
une soupape de dérivation (32) vers le filtre à huile (3), en particulier dans le support de roue dentée (39).

12. Module de lubrification selon l'une des revendications 1 à 11,
**caractérisé par**
une soupape de surpression (42) du côté pression (24) de la pompe à huile (2).

13. Module de lubrification selon l'une des revendications 1 à 12,
**caractérisé en ce que**
l'arbre d'entraînement (4) est le vilebrequin d'un moteur à combustion interne.

14. Module de lubrification selon l'une des revendications 1 à 12,
**caractérisé en ce que**
l'arbre d'entraînement (4) est entraîné par un moteur électrique.
